Europäisches Patentamt

(19) European Patent Office

Office européen des brevets

(11) Veröffentlichungsnummer: **0 227 758**

**B1**

(12) EUROPÄISCHE PATENTSCHRIFT

(45) Veröffentlichungstag der Patentschrift: **31.10.90**

(51) Int. Cl.⁵: **F 04 D 29/62, H 02 K 7/14**

(21) Anmeldenummer: **86904083.2**

(22) Anmeldetag: **27.06.86**

(86) Internationale Anmeldenummer:
**PCT/DE86/00270**

(87) Internationale Veröffentlichungsnummer:
**WO 87/00250 15.01.87 Gazette 87/01**

(54) **PUMPENAGGREGAT.**

(30) Priorität: **02.07.85 DE 3523599**

(43) Veröffentlichungstag der Anmeldung:
**08.07.87 Patentblatt 87/28**

(45) Bekanntmachung des Hinweises auf die
Patenterteilung:
**31.10.90 Patentblatt 90/44**

(84) Benannte Vertragsstaaten:
**AT DE FR GB IT NL SE**

(56) Entgegenhaltungen:
**DE-A-1 426 133**
**FR-A-1 367 242**
**FR-A-2 535 541**
**FR-E- 62 014**
**NL-A-7 016 105**
**US-A-2 969 740**

(73) Patentinhaber: **BLUM, Albert**
**Scheiderhöhe**
**D-5204 Lohmar 1 (DE)**

(72) Erfinder: **BAEHREN, Fritz**
**Lindenstrasse 60**
**D-6720 Frankenthal (DE)**
Erfinder: **ZIESE, Gerhard**
**Alfred-Delp-Strasse 32**
**D-5210 Troisdorf (DE)**

(74) Vertreter: **Vierkötter, Hans-Ulrich**
**Patentanwalt Dipl.-Ing. Vierkötter Haus Dorp**
**D-5204 Lohmar 21 (DE)**

Courier Press, Leamington Spa, England.

**Beschreibung**

Technisches Gebiet

Die Erfindung betrifft in erster Linie ein Pumpenaggregat, und zwar ein Pumpenaggregat, welches aus einem Elektromotor und einer von diesem angetriebenen Pumpe gebildet ist und bei dem der Motor in einem dünnwandigen, napfförmigen Gehäuse untergebracht ist, das vorzugsweise spanlos aus rostfreiem Stahl beispielsweise im Tiefzieh-Verfahren gebildet ist. Vergleichbare Pumpenaggregate sind aus der FR-E-62014 bekannt. Die Erfindung betrifft im besonderen die Verbindung eines solchen Motors mit einem dünnwandigen Gehäuse mit vorzugsweise einer pumpe zu einem Aggregat, ist aber keineswegs nur auf die Verbindung solcher Teile begrenzt sondern überall dort anwendbar, wo es sich darum handelt, einen Antriebsmotor mit einem insbesondere dünnwandigen Gehäuse mit einem anzutreibenden Gerät in einfacher Weise zu einem Aggregat zu verbinden, wie beispielsweise bei der Kopplung eines solchen Motors mit einem Ventilatorgehäuse oder dergleichen.

Stand der Technik

Bei Pumpenaggregaten der besagten Art wird ein Motorgehäuse, das aus dünnwandigem, rostfreiem Stahl durch Tiefziehen gebildet ist, üblicherweise mit der pumpe mit Hilfe eines Flansches verbunden, der durch Umbördeln des Gehäuserandes gebildet oder auch an den zylindrischen Teil des Gehäuses angesetzt sein kann. Bei einer solchen Ausführungsart entstehen insbesondere dann Schwierigkeiten in der Fertigung, wenn der zylindrische Teil eines solchen Gehäuserohlings, der im Tiefziehverfahren vorgeformt wurde, danach durch Abstrecken auf das genaue Maß gebracht werden muß, um eine besonders dünne Wandstärke zu erzielen.

Darstellung der Erfindung

Der Erfindung liegt die Aufgabe zu Grunde, die Mängel oder Schwierigkeiten zu beheben, die bisher bei der Verbindung dünnwandiger Gehäuse auftreten, und eine einfache, leichte und sichere Verbindung der miteinander zu verbindenden Teile auch dann zu ermöglichen, wenn dünnwandige, im Tiefziehverfahren hergestellte Motorgehäuse durch das Abstrecken von Teilen der Gehäusewandung in deren zylindrischem Teil auf eine extrem geringe Wandstärke gebracht werden müssen.

Eine solche Aufgabe ist bei einem Pumpenaggregat der eingangs genannten Art mit einem Elektromotor und einer davon angetriebenen Pumpe, bei dem der Motor in einem dünnwandigen, napfförmigen und spanlos im Tiefziehverfahren hergestellten Gehäuse untergebracht ist, dadurch zu lösen, daß das Motorgehäuse an seinem Rand einen über seinen Außenumfang vorspringenden, als Anschlag für Spannelemente verwendbaren Absatz besitzt, der durch Wandstärkeerhöhungen gebildet ist, die bei Abstrecken des tiefgezogenen Gehäuses durch den Übergang zwischen abgestreckten und nicht abgestreckten Teilen des Gehäuserohlings gebildet sind, wobei die Spannelemente einen über das Gehäuse schiebbaren, sich an diesen gebildeten Anschlag anlegenden Ring oder dergleichen einschließen. Dieser Spannring oder dergleichen kann in der Form eines Flansches ausgebildet sein, der mit dem Pumpengehäuse durch Schrauben verbindbar ist. Der Spannring kann aber auch einstückig mit dem Pumpengehäuse ausgebildet oder mit diesem fest verbunden sein, wenn man das Pumpengehäuse gegen das Motorgehäuse beispielsweise mit Hilfe einer die Gehäuseöffnung verschließenden und als Lagerschild für die Motorwelle dienenden Wand festspannbar ausbildet.

Kurze Beschreibung der Zeichnungen

Die Erfindung läßt mannigfache Ausführungsmöglichkeiten zu. In der Zeichnung ist eine Ausführungsform mit den zum Verständnis wesentlichen Teilen als Beispiel dargestellt, und zwar zeigt:

Fig. 1 im Aufriß ein Pumpenaggregat gemäß der Erfindung, zum Teil im Schnitt,

Fig. 2 den geschnittenen Teil der Fig. 1 in stark vergrößertem Maßstab und

Fig. 3 einen der Fig. 2 entsprechenden Schnitt einer abgewandelten Ausführungsform.

Ausführungsarten der Erfindung

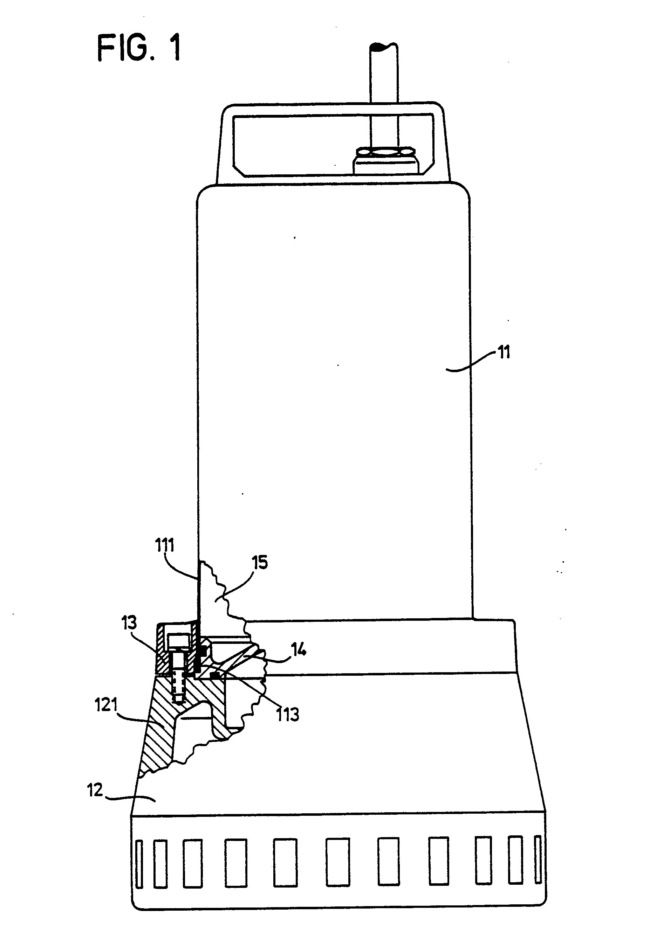

Bei der in Fig. 1 als Beispiel dargestellten Ausführungsform eines Pumpenaggregats ist von einer herkömmlichen Bauart ausgegangen, die einen Elektromotor 11 besitzt, an den eine Pumpe 12 angekoppelt ist. Beim dargestellten Ausführungsbeispiel besitzt der Motor 11 ein dünnwandiges Motorgehäuse 111, welches aus einem tiefgezogenen Gehäuserohling durch Abstrecken der zylindrischen Gehäusewandung gebildet ist.

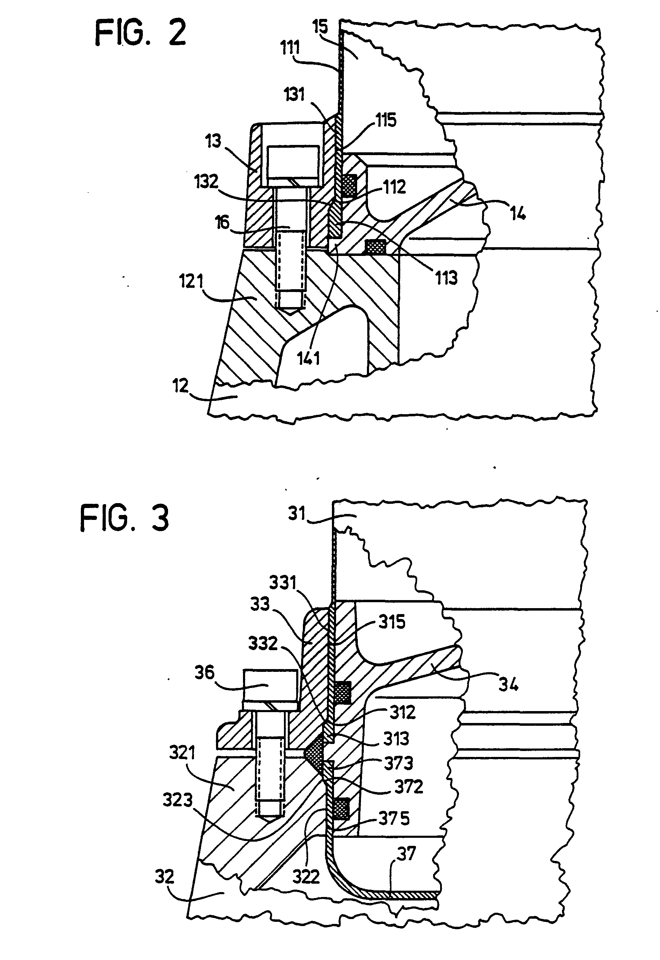

Der nach dem Abstrecken der Wandung verbleibende unabgestreckte Randteil, der die erhöhte Wandstärke des tiefgezogenen Gehäuserohlings besitzt, wird erfindungsgemäß für die Verbindung des Gehäuses mit den übrigen Teilen ausgenutzt. Zur Verbindung dient bei dem dargestellten Ausführungsbeispiel ein über das Gehäuse 111 schiebbarer Ring 13, der sich im zusammengebauten Zustand des Pumpenaggregats, wie am besten aus Fig. 2 ersichtlich ist, an einen nach außen vorspringenden Absatz 112 am Rande des Motorgehäuses 111 anlegt, der durch eine wulstartige Verstärkung 113 der Gehäusewand gebildet wird. Bei dieser Wandverstärkung handelt es sich im wesentlichen um einen unabgestreckten Teil des Motorgehäuserohlings. Das Motorgehäuse 111 kann angrenzend an diesen verstärkten Randteil 113 eine zylindrische Zentrierfläche 115 besitzen, die gegenüber der Gehäusewand 111 nur geringfügig abgesetzt ist und dazu beiträgt, die Teile beim Zusammenbau zueinander auszurichten. Der Spannring 13 legt sich mit seinem Innenumfang 131 ohne nennenswertes Spiel an diese Zentrier fläche 113 an und greift mit einem Absatz 132 an seinem Innenumfang hinter den Absatz 112 des Gehäuses 111. In die Öffnung des Motorgehäuses ist eine Trennwand 14 eingepaßt, die die Motorkammer 15 verschließt und als Lagerschild für die Motorwelle dient. Die Stirnseite des verstärkten Randteils 113 greift hinter einen Absatz 141 dieser Trennwand 14. Wird dann der Spannring 13 durch Schrauben 16, die um seinen Umfang in Abständen verteilt angeordnet sind, mit dem Pumpengehäuse 121 verschraubt, werden alle Teile fest miteinander verbunden. Der Montageaufwand ist somit sehr gering. Erwähnt werden soll in diesem Zusammenhang noch, daß sich gegebenenfalls eine weitere Verringerung der Montagekosten erzielen läßt, wenn man den Spannring 13 einstückig mit dem Pumpengehäuse 121 verbindet und die Trennwand 14 von der Pumpenkammerseite her mit dem an das Pumpengehäuse angeformten Spannring verschraubt.

Bei der in Fig. 3 dargestellten abgewandelten Ausführungsform dient der Spannring 33 dazu, die Teile eines aus zwei Motorgehäuseschalen 31 und 37 gebildeten Gehäuses miteinander und mit der Trennwand 34 sowie dem Pumpengehäuse 32 zu verbinden. Die eine Gehäuseschale 31 entspricht in ihrer Ausbildung dem Gehäuse 111 der Fig. 1 bzw. 2, insbesondere was den verstärkten Randteil 313, den Absatz 312 sowie die Zentrierfläche 315 angeht. Auch der Spannring 33 entspricht weitgehend dem Spannring 13 der Fig. 1 bzw. 2 bezüglich der Bemessung des Innendurchmessers 331 sowie des Absatzes 332. Die Spannschrauben 36 sind in einer der Fig. 1 entsprechenden Art um den Umfang des Spannrings verteilt und mit dem Pumpengehäuse 321 der Pumpe 32 verschraubbar. Das Pumpengehäuse 321 ist gegenüber dem Gehäuse 121 der Fig. 1 bzw. 2 in so weit modifiziert, als es an seinem oberen Rand eine Ausdrehung besitzt, die eine Paßfläche 322 für die Zentrierfläche 375 der Gehäuseschale 37 und einen Anschlag 323 für den Absatz 372 der Gehäuseschale 37 bildet. Die Trennwand 34 erfüllt im wesentlichen die Funktion der Trennwand 14 nach Fig. 1 bzw. 2, ist aber zur Gehäuseschale 37 hin verlängert, so daß sich beide Gehäuseschalen 31 und 37 mit den verstärkten Teilen 313 und 373 von gegenüberliegenden Seiten an den Absatz 341 anlegen können. Durch Anziehen der Schrauben 36 werden alle Teile miteinander verbunden.

## Patentansprüche

1. Pumpenaggregat mit einem Elektromotor (11) und einer davon angetriebenen Pumpe (12), bei dem der Motor (11) in einem dünnwandigen, napfförmigen und im Tiefziehverfahren hergestellten Gehäuse untergebracht ist, dadurch gekennzeichnet, daß das Motorgehäuse (111) einen an seinem Rand über seinen Außenumfang vorspringenden, als Anschlag für Spannelemente (13) verwendbaren Absatz (112) besitzt, der durch Wandstärkeerhöhungen gebildet ist, die bei Abstrecken des tiefgezogenen Gehäuses (111) durch den Übergang zwischen abgestreckten und nicht abgestreckten Teilen des Gehäuses (111) gebildet sind, wobei die Spannelemente (13) einen über das Gehäuse (111) schiebbaren, sich an diesen gebildeten Anschlag anlegenden Ring oder dergleichen einschließen.

2. Pumpenaggregat nach Anspruch 1, dadurch gekennzeichnet, daß der als Spannelement (13) dienende Ring oder dergleichen in Form eines Flansches ausgebildet ist, der durch Schrauben (16) mit dem Pumpengehäuse (121) verbindbar oder damit verspannbar ist.

3. Pumpenaggregat nach Anspruch 1 oder 2, dadurch gekennzeichnet, daß der abgesetzte Rand (112) des napfartigen Teiles des Motorgehäuses (111) gegen einen die Gehäuseöffnung verschließenden und beispielsweise als Lagerschild für die Motorwelle ausgebildeten Teil (14) spannbar ist, der mit den übrigen Teilen des Pumpenaggregates fest verbunden ist.

4. Pumpenaggregat nach einem oder mehreren der Ansprüche 1 bis 3, dadurch gekennzeichnet, daß der absatz- bzw. wulstartig verstärkte Randteil (113) des Motorgehäuses eine zylindrische Zentrierfläche (115) aufweist.

5. Pumpenaggregat nach einem oder mehreren der Ansprüche 1 bis 4, dadurch gekennzeichnet, daß die Spannelemente (13), insbesondere bei ringförmiger Ausbildung, einstückig mit dem Pumpengehäuse (121) ausgebildet oder mit diesem fest verbunden sind.

## Revendications

1. Ensemble de pompage comportant un moteur électrique (11) et une pompe (12) entraînée par celui-ci le moteur (11) étant logé dans un boîtier à paroi mince en forme de pot, réalisé par emboutissage profond, ensemble caractérisé en ce que le boîtier (111) du moteur comporte un décrochement (112) au niveau de son bord, venant en saillie par rapport à la périphérie et servant de butée pour des éléments de serrage (13), cet épaulement étant formé par une augmentation de l'épaisseur de la paroi qui, lors de l'étirage du boîtier (111) obtenu par étirage profond, est formée par la transition entre les parties étirées et les parties non étirées du boîtier (111), les éléments de serrage (13) comprenant un anneau ou analogue qui peut se glisser pardessus le boîtier (111) et vient s'appliquer contre la butée ainsi formée.

2. Ensemble de pompage selon la revendication 1, caractérisé en ce que l'anneau ou analogue servant l'élément de serrage (13) est en forme de bride qui est reliée au boîtier de pompe (121) ou peut être serrée sur celui-ci par des vis (16).

3. Ensemble de pompage selon la revendication 1 ou 2, caractérisé en ce que le bord en gradins (112) de la partie en forme de pot du boîtier de moteur (111) peut être serré contre une partie (14) fermant l'ouverture du boîtier et constituant par exemple le panneau de palier de l'axe du moteur, cette partie étant reliée solidement aux autres parties de l'ensemble de pompage.

4. Ensemble de pompage selon l'une ou plusieurs des revendications 1 à 3, caractérisé en ce que la partie de bord (113) renforcée en forme de gradins ou de bourrelet du boîtier du moteur comporte une surface de centrage (115) cylindrique.

5. Ensemble de pompage selon l'une ou plusieurs des revendications 1 à 4, caractérisé en ce que les éléments de serrage (13) font corps avec le boîtier de pompe (121) ou sont reliés solidairement avec celui-ci notamment dans le cas d'une réalisation en forme d'anneau.

**Claims**

1. A pump unit with an electric motor (11) and a pump (12) actuated thereby, in which the motor (11) is mounted in a thin-walled, cup-shaped housing produced by the deep-drawing method, characterised in that the motor housing (111) has a shoulder (112) which projects beyond its outer periphery on its edge, can be used as a stop for clamping elements (13) and is formed by thickened wall regions which are formed, during the ironing of the deep-drawn housing (111), by the transition between ironed and unironed parts of the housing (111), the clamping elements (13) including a ring or the like which can be pushed over the housing (111) and applies itself to this formed stop.

2. A pump unit according to claim 1, characterised in that the ring or the like serving as clamping element (13) is constructed in the form of a flange which can be connected to the pump housing (121) by bolts (16) or can be braced therewith.

3. A pump unit according to claim 1 or 2, characterised in that the offset edge (112) of the cup-like part of the motor housing (111) can be clamped against a part (14) which closes the housing opening and is constructed, for example, as an end shield for the motor shaft and is rigidly connected to the other parts of the pump unit.

4. A pump unit according to one or more of claims 1 to 3, characterised in that the edge part (113), which is thickened in the manner of a shoulder or bead, of the motor housing has a cylindrical centring face (115).

5. A pump unit according to one or more of claims 1 to 4, characterised in that the clamping elements (13), particularly when of annular construction, are constructed integrally with the pump housing (121) or are rigidly connected thereto.

FIG. 1

# FIG. 2

# FIG. 3